# EUROPÄISCHE PATENTSCHRIFT

(11) **EP 3 098 795 B1**
(45) Veröffentlichungstag und Bekanntmachung des Hinweises auf die Patenterteilung: **29.01.2020**
(21) Anmeldenummer: 16001368.6
(22) Anmeldetag: 05.04.2007
(51) Int. Cl.: G08B 25/10, G08B 25/00, H04L 12/701, H04W 40/12, H04L 12/721, H04L 12/733, H04L 12/727, H04W 40/10

(54) **ÜBERTRAGUNG EINER NACHRICHT IN EINEM MULTIHOP FUNK-GEFAHRENMELDESYSTEM**
TRANSMISSION OF A MESSAGE IN A MULTI-HOP WIRELESS ALARM SIGNALLING SYSTEM
TRANSMISSION D'UN MESSAGE DANS UN SYSTÈME DE SIGNALISATION D'ALARME SANS FIL À SAUTS MULTIPLES

(43) Veröffentlichungstag der Anmeldung: 30.11.2016
(62) Teilanmeldung aus: 07105778.0
(73) Patentinhaber: Siemens Schweiz AG, 8047 Zürich (CH)
(72) Erfinder: Blum, Philipp, 6005 St. Niklausen (CH); Meier, Andreas, 8134 Adliswil (CH); Strasser, Mario, 8500 Frauenfeld (CH)
(74) Vertreter: Maier, Daniel Oliver

(56) Entgegenhaltungen:
- EP-A- 1 282 094
- EP-A1- 1 507 244
- US-A1- 2005 237 944
- US-A1- 2006 013 154
- US-A1- 2006 133 328

## Beschreibung

Die Erfindung betrifft ein Verfahren und ein System zur Übertragung einer Nachricht in einem funkbetriebenen Kommunikationsnetz mit einer Basiseinheit und mehreren Teilnehmern, wobei die Basiseinheit und die Teilnehmer jeweils einen Sender und einen Empfänger aufweisen und wobei der Empfänger zu zyklischen Einschaltzeitpunkten für jeweils einen bestimmten Empfangszeitraum aktiviert wird. Eine von einem Teilnehmer an die Basiseinheit zu versendende Nachricht wird vom Teilnehmer an mindestens einen benachbarten Teilnehmer in Abhängigkeit mindestens einer Regel übermittelt wird. Es wird vom mindestens einen benachbarten Teilnehmer gemäß der mindestens einen Regel die Nachricht in Richtung der Basiseinheit an mindestens einen seiner benachbarten Teilnehmer übermittelt. Dieser Vorgang wird entsprechend wiederholt, sodass der jeweilige die Nachricht empfangende Teilnehmer die Nachricht gemäß der zumindest einen Regel wiederum an mindestens einen seiner Teilnehmer übermittelt, wobei die Nachricht zumindest an die Basiseinheit übermittelt wird.

In der EP 1 282 094 A2 wird ein Verfahren zur Funkübertragung in einem Gefahrenmeldesystem vorgeschlagen, welches über Repeater arbeitet und dennoch stromsparend ausgelegt ist, so daß Batteriebetrieb möglich ist. Dabei werden die Empfangseinrichtungen zyklisch zu vorgegebenen Zeitpunkten eingeschaltet und sendewillige Teilnehmer senden eine Präambel, die dazu führt, daß die für den Empfang vorgesehenen Teilnehmer im Falle des Empfangs bis zum Ende der gesamten Präambel eingeschaltet bleiben und im Falle, daß keine Präambel empfangen wird, wieder ausgeschaltet werden. In der Präambel wird ein Zeitpunkt übermittelt, zu dem sich der Empfänger wieder einschaltet, um das eigentliche Datentelegramm zu empfangen.

Aus der EP 1 507 244 A1 ist ein Verfahren zur Funkübertragung in einem Gefahrenmeldesystem bekannt, bei dem die Empfänger der einzelnen Teilnehmer zyklisch in vorgegebenen Abfrageintervallen eingeschaltet werden und vor dem Aussenden von Datentelegrammen jeweils eine relativ lange Präambel ausgesendet wird, damit der gewünschte Teilnehmer bei seinem nächsten Abfragezeitpunkt den Sendewunsch erkennt. Es ist vorgesehen, daß nach einem ersten Datenaustausch die Empfänger der Teilnehmer für eine vorgegebene Zeitspanne in erhöhter Empfangsbereitschaft verbleiben. Nachfolgende Datentelegramme, insbesondere Antworttelegramme, können dann ohne neue lange Präambel gesendet und empfangen werden, wodurch sich die Antwortzeiten, etwa bei der Abfrage von Bediengeräten aus, erheblich verkürzen lassen.

Aus der US 2006/0133328 A1 ist ein hierarchisches internetorientiertes Ad-hoc-Netzwerk bekannt, das durch eine Software-Infrastruktur definiert ist. Das Ad-hoc-Netzwerk besteht aus festen Gateway-Knoten und einer Vielzahl von drahtlosen Knoten, die fest oder mobil sein können und die als Teilnehmer, Router oder beides fungieren können. Die Infrastruktur-Hierarchie wird durch die sogenannte "Hop"-Zahl jedes Knotens definiert (Entfernung dieses Knotens zu einem festen Gateway-Knoten). Die Software-Infrastruktur beinhaltet zwei Tabellen, die jedem Knoten im Netzwerk zugeordnet sind: die vorgelagerte Routingtabelle, die die kürzesten Routen zu festen Gateway-Knoten über vorgelagerte Nachbarn bereitstellt, und die nachgelagerte Routingtabelle, die den Teilnehmern die kürzesten Routen über nachgelagerte Nachbarn bereitstellt. Diese beiden Tabellen werden von Routing-Algorithmen verwendet. Eine Peer-Tabelle kann auch für alternative Routen verwendet werden. Die Wartung der oben genannten Tabellen erfolgt durch autonome Algorithmen, die lokal auf jedem Knoten arbeiten, indem sie Signale von ihren Nachbarn empfangen und verarbeiten.

Funkbasierte bzw. funkbetriebene Gefahrenmeldesysteme umfassen in einer Funkzelle Meldesensoren als Teilnehmer des Gefahrenmeldesystems, die im Fall einer detektierten Gefahr (Brand, Einbruch etc.) eine Gefahrenmeldung über eine Funkverbindung an eine Zentrale übermitteln. Die Übertragung kann dabei direkt an eine Gefahrenmeldezentrale (dann hat das Gefahrenmeldesystem nur eine Funkzelle) oder über Teilnehmer, zum Beispiel Gefahrenmeldeeinheiten, wie zum Beispiel Brandmelder, Einbruchsmelder, Gasmelder, akustische Meldeeinheiten, optische Meldeeinheiten, optoakustische Meldeeinheiten etc. des Gefahrenmeldesystems erfolgen. Dabei werden derartige funkbasierte Gefahrenmeldesysteme als sogenannten Multihop Funk Gefahrenmeldesysteme bezeichnet, wenn es Teilnehmer gibt, die nicht direkt mit der Zentrale verbunden sind. Nachrichten werden dann entlang von Kommunikationspfaden bzw. Übertragungswegen übertragen. Grundsätzlich wird ein Multihop Gefahrenmeldesystem als verbunden bezeichnet, wenn zwischen jedem Paar von Teilnehmern mindestens ein Kommunikationspfad besteht.

Hat die Zentrale eine Nachricht von einem Teilnehmer erhalten, so können zum Beispiel zur Beseitigung der Gefahr weitere Maßnahmen (Alarmierung der Feuerwehr bzw. der Polizei) eingeleitet werden. Die Meldesensoren umfassen dabei eine Sende- und Empfangseinrichtung und sollen für einen Einsatz an unzulänglichen Orten möglichst autark, das heißt mit einer Batterie und nicht durch einen Kabelanschluss an einem Stromnetz betrieben werden. Dafür sind alle Komponenten des Meldesensors möglichst stromsparend auszulegen, und die Komponenten sollten auch nur zu bestimmten Zeiten eingeschaltet werden und nicht ständig in Betrieb sein. Die Batterielebensdauer soll beispielsweise größer als fünf Jahre sein. Auch weitere Teilnehmer, wie zum Beispiel Bedienfelder, optische, akustische, optoakustische Meldeeinheiten etc. sollen mit der Zentrale oder mit Zwischenstationen über eine Funkübertragung kommunizieren können und sind daher wie die Meldesensoren entsprechend stromsparend auszulegen.

Grundsätzlich ist es wichtig, dass jeder Teilnehmer der Basiseinheit zuverlässig und schnell Nachrichten übermitteln kann. Insbesondere muss sichergestellt sein, dass ein Teilnehmer eine erkannte Gefahr an die Basiseinheit sicher melden kann. Dabei ist es nicht notwendig, dass der versendende Teilnehmer und die Basiseinheit benachbart sind, d.h. eine Nachricht kann über möglicherweise mehrere Teilnehmer bzw. Zwischenstationen zum Ziel geleitet werden. Diese Funktion wird typischerweise als Routing bezeichnet.

Ein Routingverfahren wird als zuverlässig bezeichnet, wenn eine Nachricht auch dann das Ziel erreicht, wenn eine oder mehrere Teilnehmer des funkbetriebenen Gefahrenmeldesystems ausfallen oder die Kommunikation zwischen zwei oder mehr benachbarten Teilnehmern gestört ist. Natürlich ist dies nicht in jedem Fall möglich, sondern nur solange wie ein Kommunikationspfad zwischen Ursprungs- und Zieleinheit besteht. Wenn ein solcher Kommunikationspfad bzw. Übertragungsweg besteht, soll ein zuverlässiges Routingverfahren die Nachricht mit hoher Wahrscheinlichkeit zur Zielstation transportieren.

Die Laufzeit einer Nachricht in einem Multihop System ist grundsätzlich bestimmt durch die Zahl der Zwischenstationen auf dem kürzesten Kommunikationspfad zwischen Ursprungs- und Zieleinheit, sowie der durchschnittlichen Übertragungszeit zwischen zwei benachbarten Teilnehmern. Die durchschnittliche

Übertragungszeit zwischen zwei benachbarten Teilnehmern ist hauptsächlich durch die Länge der inaktiven Phase der Teilnehmer bestimmt. Ein Routingverfahren wird als schnell bezeichnet, falls die Laufzeit die oben beschriebene Laufzeit in der Regel unterschreitet bzw. niemals deutlich überschreitet.

In bekannten Multihop Funksystemen sind zur Nachrichtenübertragung zwei Ansätze bekannt:
- Beim ersten Ansatz wird der Empfang einer Meldung von der Zieleinheit quittiert, das heißt eine Quittungsmeldung wird wiederum über mehrere Teilnehmer an den absendenden Teilnehmer gesendet. Falls die Meldung oder deren Quittung nicht ankommt versendet der absendende Teilnehmer die Meldung erneut. Je nach Ausgestaltung des Verfahrens werden dabei die gleichen oder teilweise andere Teilnehmer benutzt. Der Nachteil derartiger Verfahren ist, dass sowohl die Quittierung als auch das erneute Versenden der Nachricht und eventuell auch das Bestimmen neuer Zwischeneinheiten Zeit benötigt. Solche Verfahren sind zuverlässig, aber im Fehlerfall langsam.
- Beim zweiten Ansatz werden für die Übermittlung einer Meldung von Anfang an verschiedene Pfade (Abfolgen von Zwischeneinheiten) verwendet. Somit erreicht die Meldung die Zieleinheit auch in dem Fall, dass eine begrenzte Zahl von Zwischeneinheiten ausfällt oder die Kommunikation zwischen benachbarten Teilnehmern gestört ist. Eine mögliche Ausgestaltungsform dieses Ansatzes ist als Fluten (Flooding) bekannt. Hier wird eine Meldung jeweils an alle benachbarten Teilnehmer weitergeleitet, was den Energieverbrauch des funkbetriebenen Systems erheblich erhöht.
- Die Übertragungszeit zum Versenden einer Nachricht nimmt direkt mit der Anzahl der Zwischeneinheiten zu, da eine Nachricht erst dann weitergeleitet werden kann, wenn sie komplett empfangen wurde. Die Übertragungszeit kann daher dadurch verkleinert werden, dass ein möglichst kurzer Pfad verwendet wird, also möglichst wenige Zwischenstationen involviert werden. Dies ist möglich, wenn Strecken zwischen benachbarten, aber geographisch möglichst weit auseinander liegenden Teilnehmern verwendet werden. Solche Strecken sind typischerweise aber fehleranfälliger als andere, was zwar zu einer schnellen, aber nicht zuverlässiger Kommunikation führt.

Die Aufgabe der vorliegenden Erfindung ist darin zu sehen, eine Lösung für eine schnellstmögliche zuverlässige, jedoch energieeffiziente Übertragung von Nachrichten in einem funkbetriebenen Gefahrenmeldesystem vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass die Teilnehmer in Bezug auf die Basiseinheit unterschiedlichen Kommunikationsebenen zugeordnet sind, wobei als mindestens eine Regel die Kommunikationsebene eines Teilnehmers verwendet wird. Gemäß einer Regel wird vom mindestens einen die Nachricht versendenden Teilnehmer die Nachricht an mindestens zwei Teilnehmer mit niedrigerer Kommunikationsebene und mit dem jeweils frühest möglichen Einschaltzeitpunkt weitergeleitet.

Nach einer Verfahrensvariante wird vom mindestens einen die Nachricht versendenden Teilnehmer die Nachricht zuerst an die mindestens zwei Teilnehmer mit der niedrigeren Kommunikationsebene und dann an mindestens einen Teilnehmer mit gleich hoher Kommunikationsebene und mit dem jeweils frühest möglichen Einschaltzeitpunkt weitergeleitet.

Nach einer dazu alternativen Verfahrensvariante wird vom mindestens einen die Nachricht versendenden Teilnehmer die

Nachricht zuerst an zwei Teilnehmer mit der niedrigeren Kommunikationsebene und dann an mindestens einen Teilnehmer mit gleich hoher Kommunikationsebene und mit dem frühest möglichen Einschaltzeitpunkt weitergeleitet, wenn einer der zwei Teilnehmer mit der niedrigeren Kommunikationsebene den Erhalt der Nachricht nicht bestätigt hat.

Ein funkbetriebenes Kommunikationsnetz weist zumindest eine Basiseinheit und mehrere Teilnehmer auf. Dabei besitzen die Basiseinheit und die Teilnehmer jeweils einen Sender und einen Empfänger, wobei der Empfänger zu zyklischen Einschaltzeitpunkten für jeweils einen bestimmten Empfangszeitraum aktiviert ist. Zur Übertragung der Nachricht in einem funkbetriebenen Kommunikationsnetz wird von jedem Teilnehmer mindestens eine Information betreffend den Einschaltzeitpunkt des Teilnehmers an die direkt benachbarten Teilnehmer gesendet. Gemäss einer Regel wird die Information der Einschaltzeit eines Teilnehmers verwendet, indem die Nachricht an den mindestens einen Teilnehmer gesendet wird, der den frühest möglichen Einschaltzeitpunkt aufweist.

Im Allgemeinen wird als Basiseinheit eine Gefahrenmeldezentrale verwendet, da zum Beispiel Gefahren üblicherweise schnell und zuverlässig an eine Gefahrenmeldezentrale gemeldet werden müssen.

Eine weitere Regel zur Nachrichtenübermittlung kann erfindungsgemäss die Verwendung der Kommunikationsebene eines Teilnehmers sein. Dabei teilt jeder Teilnehmer seinen benachbarten Teilnehmern zum Beispiel in drei Gruppen ein. Ein benachbarter Teilnehmer ist entweder näher bei der Basiseinheit (Parent), womit er zur Gruppe "nah" zugeordnet wird. Oder er ist "gleich weit" (Peer) von der Basiseinheit entfernt oder der benachbarte Teilnehmer ist weiter entfernt "fern" (Child). Selbstverständlich sind jegliche Einteilungen in betreffende Gruppen für das erfindungsgemässe Verfahren vorstellbar.

Um nun die Einteilung der benachbarten Teilnehmer in "Parents", "Peers" und "Children" vornehmen zu können müssen die Teilnehmer ihre Distanz zur Basiseinheit kennen (ohne die Allgemeinheit des Verfahrens einzuschränken wird nachfolgend immer davon ausgegangen, dass die Basiseinheit als Ziel für eine zu versendende Nachricht fungiert). Für den Aufbau dieser Information können beispielsweise bekannte Verfahren zur Konstruktion eines sogenannten kürzesten Übertragungsweg-Baumes (Shortest Path Tree = SPT) verwendet werden. Dabei setzen alle Teilnehmer die Distanz zur Basiseinheit zum Beispiel anfänglich auf einen sehr hohen Wert. Nun beginnt die Basiseinheit damit, an alle benachbarten Teilnehmer eine Signalisierungsnachricht mit einem Parameter (Wert) mit dem sinngemäßen Inhalt "Level=1" zu verschicken. Die Teilnehmer, die eine solche Signalisierungsnachricht erhalten, setzen Ihre Distanz auf den erhaltenen Wert (also 1) und verschicken ihrerseits eine Signalisierungsnachricht mit Inhalt "Level=2", also den nächst höheren Wert, an alle ihnen benachbarten Teilnehmer. Immer wenn ein Teilnehmer eine Signalisierungsnachricht mit einem Wert erhält, welcher niedriger ist als die momentan gespeicherte Kommunikationsebene bzw. Distanz zur Basiseinheit, wird diese Kommunikationsebene gespeichert und die benachbarten Teilnehmer werden entsprechend mit einer Signalisierungsnachricht mit dem Parameter, der die nächst höhere Kommunikationsebene repräsentiert, benachrichtigt. Im anderen Fall, also der erhaltene Wert ist gleich groß oder größer als die momentan gespeicherte Kommunikationsebene, wird die Signalisierungsnachricht ignoriert und verworfen.

Eine Nachricht wird erfindungsgemäss gemäss der mindestens einen Regel dann nur an solche Teilnehmer versandt, die eine niedrigere und/oder gleich hohe Kommunikationsebene aufweisen. Die niedrigere Kommunikationsebene ist im Bezug auf die Kommunikationsebene des versendenden Teilnehmers zu sehen. Der Teilnehmer mit niedrigerer Kommunikationsebene wird ermittelt, indem der versendende Teilnehmer seine eigene Kommunikationsebene mit der Kommunikationsebene seiner benachbarten Teilnehmer vergleicht, die er aufgrund der ausgetauschten Signalisierungsnachrichten kennt.

Eine weitere Regel des Verfahrens legt fest, in welcher Reihenfolge die ausgewählten "Parents" und "Peers" angesprochen werden. Hierzu werden die beschriebenen Einschaltzeitpunkte der benachbarten Teilnehmer verwendet. Die Einschaltzeitpunkte können zum Beispiel als sekundäres Ordnungsmerkmal, aber auch als primäres Ordnungsmerkmal, verwendet werden. Das heißt, zuerst werden "Parents" und danach "Peers" angesprochen. Wenn mehrere Parents (oder Peers) zur Auswahl stehen, werden diese in der Reihenfolge der Aufwachzeitpunkte angesprochen.

Gemäss dem erfindungsgemässen Verfahren kann eine zu versendende Nachricht von einem Teilnehmer an mehrere benachbarte Teilnehmer verschickt werden. Dabei wird jeweils ein einzelner benachbarter Teilnehmer adressiert. Teilnehmer, welche die Nachricht erhalten, können diese wiederum gemäss dem erfindungsgemässen Verfahren an mehrere benachbarte Teilnehmer weiterleiten. Damit wird sichergestellt, dass die Nachricht mindestens einmal die Basiseinheit erreicht.

Als eine der wichtigsten Regeln gilt, dass "Parents" gegenüber "Peers" bevorzugt werden, da diese einen kürzeren Kommunikationspfad bzw. Übertragungsweg zur Basiseinheit besitzen. "Children" werden in der Regel nicht verwendet, da sich sonst die Meldung von ihrem Ziel weg bewegt.

Eine weitere Regel kann festlegen, dass Teilnehmer eine Gefahrenmeldung nie an einen benachbarten Teilnehmer weiterleiten von der diese Nachricht empfangen wurde.

Ein Teilnehmer kann grundsätzlich die gleiche Nachricht auch mehrmals erhalten. In diesem Fall wird die Nachricht nur beim ersten Empfang weitergeleitet, nachfolgend erhaltenen Kopien der Meldung werden ignoriert.

Das erfindungsgemässe Verfahren kann auch derart gestaltet werden, dass bei jeder Kommunikation zwischen benachbarten Teilnehmern quittiert wird, also der Empfang der Nachricht mittels einer Signalisierungsnachricht bestätigt wird. Falls keine Quittung bzw. Bestätigung erhalten wird, muss der versendende Teilnehmer davon ausgehen, dass die Meldung nicht korrekt empfangen wurde. Um trotzdem eine genügende Zuverlässigkeit zu erhalten kann ein Teilnehmer die Nachricht nun an zusätzliche "Parents" und/oder "Peers" übermitteln. Dabei gelten folgende Regeln:
a) Ein benachbarter Teilnehmer, welcher den Erhalt der Nachricht nicht quittiert hat, wird erst wieder angesprochen, wenn alle anderen "Parents" und "Peers" angesprochen wurden und dieser mindestens eine Übermittlungsversuch nicht oder nur teilweise erfolgreich war, also, dass zumindest ein benachbarter Teilnehmer keine Bestätigung zurück gesandt hat.
b) Nur beim ersten Durchgang des Übermittlungsversuchs werden die Teilnehmer mit niedriger Kommunikationsebene "Parents" gegenüber den Teilnehmern mit höherer Kommunikationsebene "Peers" bevorzugt, danach werden nur noch die Einschaltzeitpunkte verwendet.
c) Wenn ein Teilnehmer den Erhalt der Nachricht quittiert, wird er nicht mehr weiter angesprochen.
d) Die maximale Anzahl der Übermittlungsversuche ist ein wählbarer Parameter bzw. ein Wert.

Die verschiedenen Parameter bzw. die verschiedenen Regeln können bei jeder Kommunikation mit einem Teilnehmer in Form einer Signalisierungsnachricht von der Basiseinheit übermittelt werden. Der Teilnehmer speichert die Parameter und die Regeln und wendet sie im Bedarfsfall an.

Die Einteilung der Teilnehmer in Kommunikationsebenen, wie zum Beispiel "Parents", "Peers" und "Children" kann auch dazu verwendet werden, Nachrichten effizient von der Basiseinheit zu den Teilnehmern zu übertragen. Dabei werden die benachbarten Teilnehmer wie folgt ausgewählt:
a) Eine Nachricht wird an alle Teilnehmer mit hoher Kommunikationsebene, zum Beispiel "Children", versandt.
b) Die Reihenfolge der Übermittlung an die Teilnehmer mit hoher Kommunikationsebene "Children" untereinander wird nach deren Einschaltzeitpunkte bestimmt.
c) Je nach gewünschter Zuverlässigkeit können zusätzlich auch Teilnehmer mit niedrigerer Kommunikationsebene, zum Bespiel "Peers" verwendet werden.

Ein Vorteil des erfindungsgemässen Verfahrens liegt darin, dass ein Ereignis, wie zum Beispiel ein Alarm, schnell und zuverlässig über mehrere Teilnehmer an eine Basiseinheit gemeldet werden kann. Besonders ausgeprägt ist der Geschwindigkeitsvorteil gegenüber solchen Systemen, bei welchen die Teilnehmer nicht permanent sondern nur periodisch für die Kommunikation zur Verfügung stehen.

Ein weiterer Vorteil des Verfahrens besteht in der Zuverlässigkeit in dem Sinn, dass das System auch dann eine Nachricht von einem Teilnehmer an die Basiseinheit zuverlässig übermittelt, wenn eine oder mehrere Teilnehmer, selbstverständlich außer dem ursprünglich die Nachricht versendenden Teilnehmer und der Basiseinheit, nicht funktionieren bzw. ein oder mehrere benachbarte Teilnehmer temporär nicht miteinander kommunizieren können. Somit weist das erfindungsgemässe Verfahren einen den üblichen Routing-Verfahren über eine a-priori festgelegte Route erheblich Vorteile auf. Ein solches "herkömmliches" Routingverfahren kann zuverlässiger gestaltet werden, wenn bei auftretenden Problemen dynamisch eine neue Route gesucht wird, jedoch benötigt ein derartiges dynamisches Verfahren sehr viel mehr Zeit für die Übertragung einer Nachricht.

Durch die Verwendung des erfindungsgemässen Verfahrens kann eine hohe Zuverlässigkeit bei geringem Energieverbrauch erreicht werden.

Die Erfindung wird anhand eines in einer Figur dargestellten Ausführungsbeispiels näher erläutert. Dabei zeigen
- Figur 1: ein typisches Beispiel für ein Multihop Funk Gefahrenmeldesystem,
- Figur 2: ein Multihop Funk Gefahrensystem, bei welchem die Teilnehmer in Kommunikationsebenen eingeteilt sind,

- Figur 3: einen Nachrichtenversand in einem gemäss Figur 2 eingeteilten Multihop Funk Gefahrenmeldesystem,
- Figur 4: das Versenden einer Nachricht von der Basiseinheit an die Teilnehmer,
- Figur 5: den Versand einer Nachricht aus Sicht eines Teilnehmers.

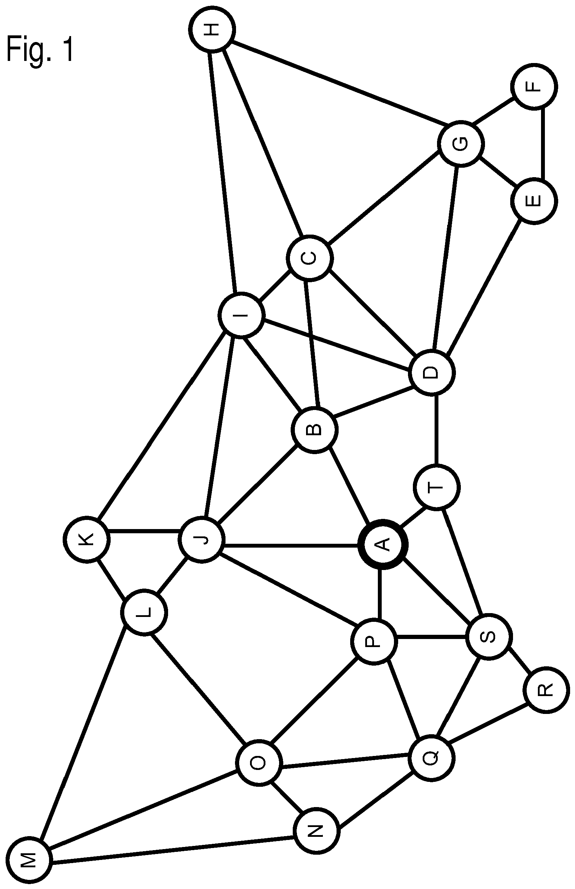

Figur 1 zeigt ein typisches Beispiel für ein Multihop Funk Gefahrenmeldesystem. Dabei weist dieses System eine Basiseinheit A und mehrere Teilnehmer B bis T auf.

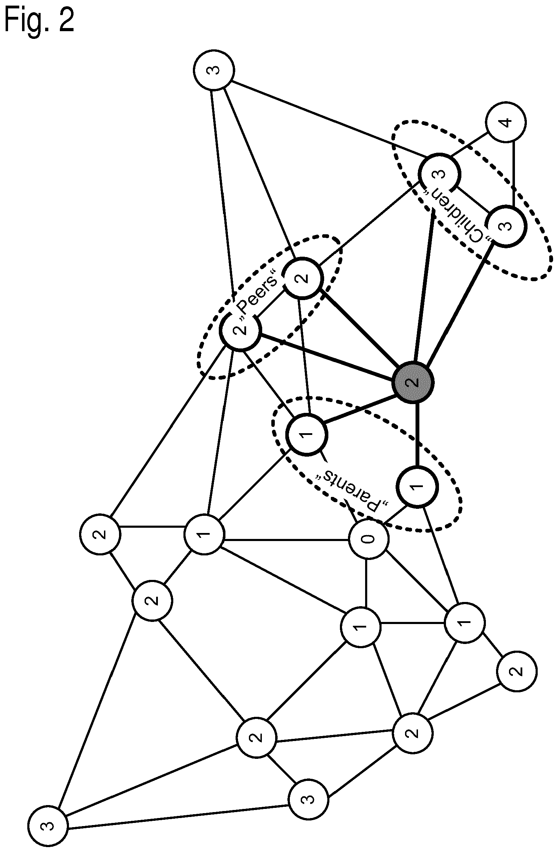

Figur 2 zeigt ein Multihop Funk Gefahrensystem, bei welchem die Teilnehmer in Kommunikationsebenen 0, 1, 2, 3, 4 eingeteilt sind. Die Basiseinheit A hat die Kommunikationsebene 0. Die direkt benachbarten Teilnehmer T, B, J, P, S haben die Kommunikationsebene 1. Die Kommunikationsebene gibt die minimale Anzahl der Teilnehmer zwischen dem Teilnehmer und der Basiseinheit an. Der dunkel hervor gehobene Teilnehmer D hat die Distanz bzw. Kommunikationsebene 2 (eine Zwischeneinheit) zur Basiseinheit A, und damit zwei nahe Teilnehmer T, B mit Kommunikationsebene 1 (Parents), zwei gleich weit entfernte Teilnehmer I, C mit Kommunikationsebene 2 (Peers), sowie zwei entfernte Teilnehmer G, E mit Kommunikationsebene 3 (Children). Die Teilnehmer B, T, J, P, S, die direkt mit der Basiseinheit A verbunden sind, also benachbart sind, haben die Kommunikationsebene 1 und somit die Distanz 1 zur Basiseinheit A.

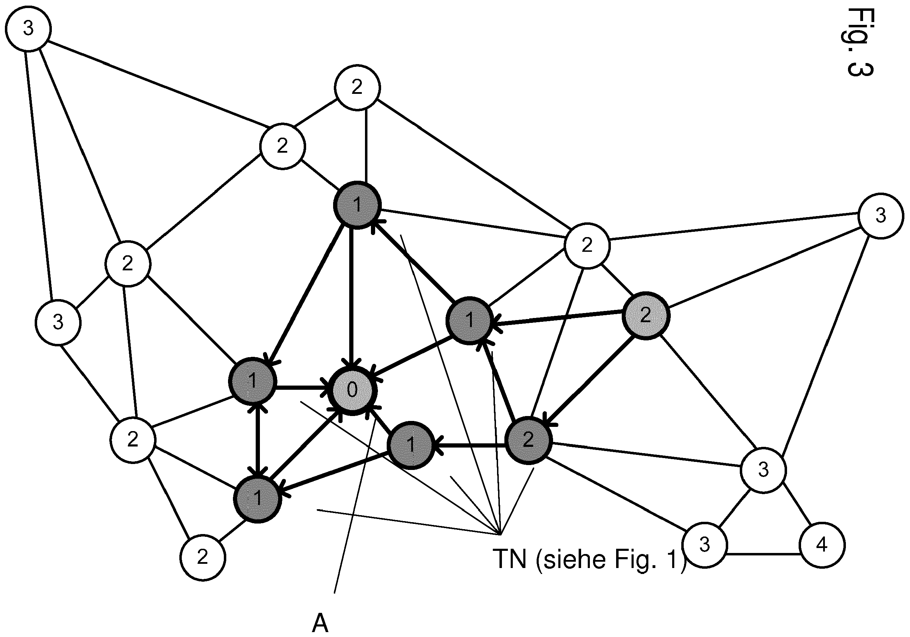

Figur 3 zeigt einen Nachrichtenversand in einem gemäss Figur 2 eingeteilten Multihop Funk Gefahrenmeldesystem mit der Bezeichnung der Teilnehmer gemäss Figur 1. Der Teilnehmer C generiert eine Gefahrenmeldung für die Basiseinheit A. Der Teilnehmer C schickt diese Nachricht an seinen einzigen "Parent" - Teilnehmer B und zusätzlich an einen "Peer" - Teilnehmer D. Der Teilnehmer B leitet die Nachricht an die Basiseinheit A, sowie an den Teilnehmer J. Der Teilnehmer D sendet die Meldung an die zwei "Parents"-Teilnehmer B und T, etc. Die am Versand beteiligten Teilnehmer sind dunkel hervor gehoben. Die verwendeten Kommunikationsverbindungen sind fett gezeichnet.

Dabei versendet ein Teilnehmer die Nachricht gemäss einer Regel niemals an den Teilnehmer zurück, von der er die Nachricht erhalten hat. In diesem Beispiel sendet der Teilnehmer J die Nachricht an die Basiseinheit A und dem Teilnehmer P und nicht an den Teilnehmer B, da die Nachricht vom Teilnehmer B empfangen wurde. Eine Nachricht kann dabei eine Signalisierungsnachricht, eine Alarm-Nachricht, eine Nachricht betreffend den Austausch von Nutzdaten etc. sein.

Empfängt ein Teilnehmer B von mehreren Teilnehmern, hier die Teilnehmer C und D, die Nachricht, leitet der Teilnehmer B gemäss einer Regel die Nachricht trotzdem nur einmal an die Teilnehmer A und J weiter.

Jeder an der Nachrichtenübermittlung beteiligter Teilnehmer J, B, D, T, S, P übermittelt die Nachricht an zwei benachbarte Teilnehmer J, B, D, T, S, P. Damit wird das erfindungsgemässe Verfahren zuverlässig gegenüber Ausfällen von einzelnen Teilnehmer oder einer gestörten Kommunikation zwischen benachbarten Teilnehmern. Die Anzahl zu benachrichtigender benachbarter Teilnehmer J, B, D, T, S, P kann ein mit Hilfe eines Parameter k bestimmt sein. Höhere Werte von k führen zu erhöhter Zuverlässigkeit, allerdings auch zu entsprechend erhöhtem Energieverbrauch, da mehr Nachrichten verschickt werden. Die Benachrichtigung von zwei benachbarten Teilnehmer J, B, D, T, S, P hat sich als vorteilhaft erwiesen, da so bereits eine hohe Zuverlässigkeit zu relativ kleinen Kosten bez. Energieverbrauch erreicht wird.

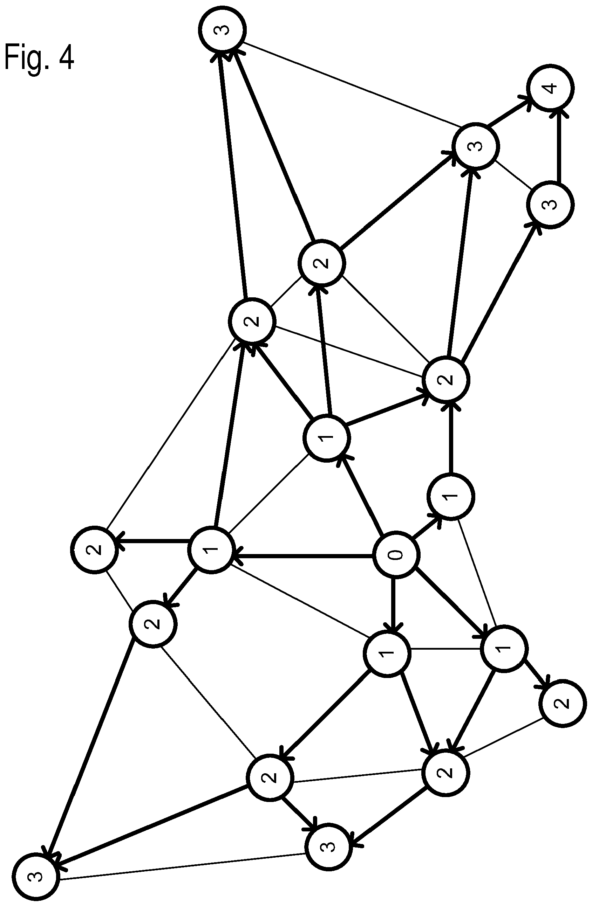

Figur 4 zeigt ein Beispiel des Versendens einer Nachricht von der Basiseinheit an die Teilnehmer B-T. Dabei wird eine Nachricht an die Teilnehmer B-T gesendet. Teilnehmer E, G mit hoher Kommunikationsebene (Children) werten diese Nachricht aus. Die Teilnehmer D, I, C, K, L, R, Q, 0 verwerfen zum Beispiel diese Nachricht. So können alle Teilnehmer B bis T erreicht werden. Dies ist aber nur gewährleistet wenn jede geplante Übertragung auch erfolgreich ist. Trotzdem kann aufgrund des erfindungsgemässen Verfahrens die Nachricht an den Ziel-Teilnehmer übermittelt werden, obwohl Teilnehmer im Kommunikationsnetz ausgefallen sind.

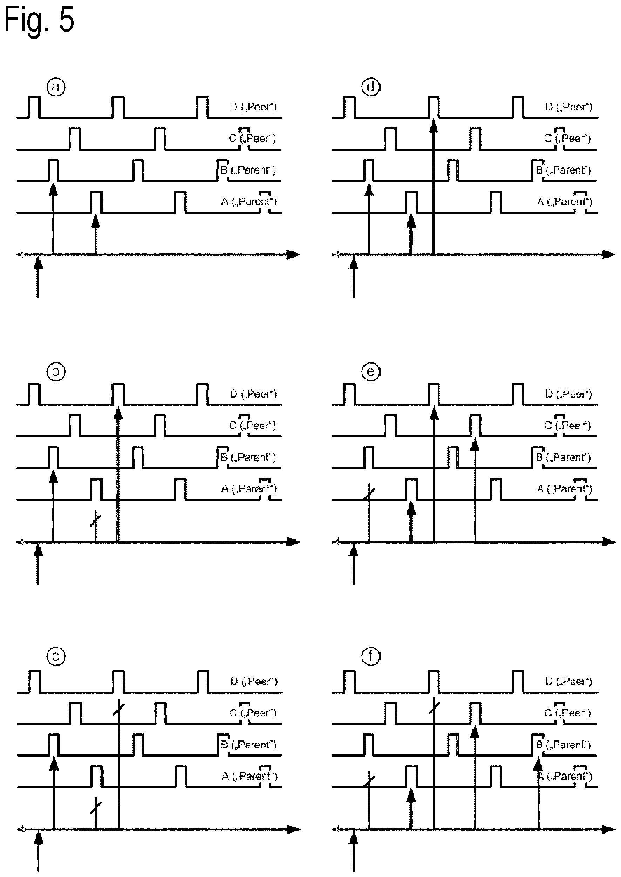

Figur 5 zeigt den Versand einer Nachricht aus Sicht eines Teilnehmers gemäss folgender Beispiele:
a) Eine Nachricht wird an insgesamt zwei benachbarte Teilnehmer übermittelt. Da zwei "Parents"-Teilnehmer A, B zur Verfügung stehen wird die Nachricht nicht an einen "Peer"-Teilnehmer C, D versandt. Der "Parent"-Teilnehmer B wird vor dem "Parent"-Teilnehmer A verwendet, da zum Zeitpunkt der "Parent"-Teilnehmer B zum Zeitpunkt der Nachrichtenübermittlung einen früheren Einschaltzeitpunkt als der "Parent"-Teilnehmer A aufweist.
b) Die Nachricht wird an den "Parent"-Teilnehmer B gesandt, dieser den frühest möglichen Einschaltzeitpunkt aufweist. Bei der Nachrichtenübermittlung an den "Parent"-Teilnehmer erhält der versendende Teilnehmer keine Bestätigung, dass die Nachricht vom "Parent"-Teilnehmer A empfangen wurde. Der versendende Teilnehmer übermittelt daher alternativ die Nachricht an den "Peer"-Teilnehmer D
c) Die Nachricht wird wieder an den "Parent"-Teilnehmer B mit dem frühest möglichen Einschaltzeitpunkt übermittelt. Der Nachrichtenübermittlungsversuch an den "Parent"-Teilnehmer A und den "Peer"-Teilnehmer scheitert, da diese den Empfang der Nachricht nicht bestätigen. In diesem Beispiel ist die Anzahl der Versuche auf einen Versuch begrenzt, was dazu führt, dass die Nachricht nur an den "Parent"-Teilnehmer übermittelt wurde, da der Übermittlungsversuch an die weiteren benachbarten Teilnehmer A, D scheiterte.
d) In diesem Beispiel wird die Nachricht an insgesamt drei benachbarte Teilnehmer B, A, D übermittelt, neben den "Parents"-Teilnehmer A und B wird die Nachricht auch an einen "Peer"-Teilnehmer D versandt. Es wird der "Peer"-Teilnehmer D zur Nachrichtenübermittlung gewählt, da zum Zeitpunkt des Versands der Nachricht an die beiden "Parents"-Teilnehmer A, B der "Peer"-Teilnehmer D den weiteren frühest möglichen Einschaltzeitpunkt hat. Die Reihenfolge der Nachrichtenübermittlung ist also B-A-D und nicht B-C-A, da die Einschaltzeitpunkte in diesem Beispiel erst in zweiter Linie berücksichtigt werden. Vorrangig werden für die Übertragung der Nachricht die "Parents"-Teilnehmer B, A gewählt.
e) In diesem Beispiel bestätigt der "Parent"-Teilnehmer B den Empfang der Nachricht nicht. Daraufhin werden die Teilnehmer in der Reihenfolge A-D-C benachrichtigt. Der Teilnehmer C deshalb, weil an den Teilnehmer B ein weiterer Übermittlungsversuch erst dann stattfindet wenn bei allen anderen benachbarten Teilnehmer ein Übermittlungsversuch stattgefunden hat.
f) Der Teilnehmer B, dem aufgrund seines Einschaltzeitpunktes die Nachricht zuerst übermittelt wurde, bestätigt den Erhalt der Nachricht nicht. Daraufhin findet ein Übermittlungsversuch an alle benachbarten Teilnehmer A, D, C statt. Bei den Teilnehmern A und C ist die Nachrichtenübermittlung erfolgreich. Ebenso wie bei Teilnehmer B bestätigt der Teilnehmer D den Empfang der Nachricht nicht. Nachdem bei allen benachbarten Teilnehmern zumindest ein Übermittlungsversuch der Nachricht stattgefunden hat, wird ein weiterer Übermittlungsversuch der Nachricht bei Teilnehmer B durchgeführt. Diesmal führt der Übermittlungsversuch zum Erfolg und Teilnehmer B bestätigt den Empfang der Nachricht.

## Patentansprüche

1. Verfahren zur Übertragung einer Nachricht in einem funkbetriebenen Kommunikationsnetz mit einer Basiseinheit (A) und mehreren Teilnehmern (B bis T), wobei die Basiseinheit (A) und die Teilnehmer (B bis T) jeweils einen Sender und einen Empfänger aufweisen und wobei der Empfänger zu zyklischen Einschaltzeitpunkten für jeweils einen bestimmten Empfangszeitraum aktiviert wird,
- wobei eine von einem Teilnehmer (C) an die Basiseinheit (A) zu versendende Nachricht vom Teilnehmer (C) an mindestens einen benachbarten Teilnehmer (D, B, I) in Abhängigkeit mindestens einer Regel übermittelt wird,
- wobei vom mindestens einen benachbarten Teilnehmer (D, B, I) gemäß der mindestens einen Regel die Nachricht in Richtung der Basiseinheit (A) an mindestens einen seiner benachbarten Teilnehmer (T, B, K, J, D) übermittelt wird,
- wobei dieser Vorgang entsprechend wiederholt wird, sodass der jeweilige die Nachricht empfangende Teilnehmer (T, B, K, J, D) die Nachricht gemäß der zumindest einen Regel wiederum an mindestens einen seiner Teilnehmer (T, B, K, J, D) übermittelt, wobei die Nachricht von dem mindestens einen Teilnehmer (B, T, J), der mit der Basiseinheit (A) direkt benachbart ist, zumindest an die Basiseinheit (A) übermittelt wird,
- wobei die Teilnehmer (B bis T) in Bezug auf die Basiseinheit (A) unterschiedlichen Kommunikationsebenen zugeordnet sind, wobei die mindestens eine Regel die Kommunikationsebene eines Teilnehmers (B bis T) verwendet, und
- wobei gemäß der Regel vom mindestens einen die Nachricht versendenden Teilnehmer (R, Q, 0, L, K, I, C, E, G) die Nachricht an mindestens zwei Teilnehmer (J, B, D, T, S, P) mit niedrigerer Kommunikationsebene und mit dem jeweils frühest möglichen Einschaltzeitpunkt weitergeleitet wird.

2. Verfahren nach Anspruch 1, wobei vom mindestens einen die Nachricht versendenden Teilnehmer (R, Q, 0, L, K, I, C, E, G) die Nachricht zuerst an die mindestens zwei Teilnehmer (J, B, D, T, S, P) mit der niedrigeren Kommunikationsebene und dann an mindestens einen Teilnehmer (J, B, D, T, S, P) mit gleich hoher Kommunikationsebene und mit dem jeweils frühest möglichen Einschaltzeitpunkt weitergeleitet wird.

3. Verfahren nach Anspruch 1, wobei vom mindestens einen die Nachricht versendenden Teilnehmer (R, Q, 0, L, K, I, C, E, G) die Nachricht zuerst an zwei Teilnehmer (J, B, D, T, S, P) mit der niedrigeren Kommunikationsebene und dann an mindestens einen Teilnehmer (J, B, D, T, S, P) mit gleich hoher Kommunikationsebene und mit dem frühest möglichen Einschaltzeitpunkt weitergeleitet wird, wenn einer der zwei Teilnehmer (J, B, D, T, S, P) mit der niedrigeren Kommunikationsebene den Erhalt der Nachricht nicht bestätigt hat.

4. Verfahren nach Anspruch 1, 2 oder 3, wobei mindestens eine Regel die Anzahl der benachbarten Teilnehmer (I, B, D) angibt, an welche die Nachricht übermittelt werden soll.

5. Verfahren nach Anspruch 4, wobei die Anzahl der benachbarten Teilnehmer (I, B, D), die die Nachricht erhalten sollen, durch einen beim Teilnehmer (C) gespeicherten Parameter festgelegt wird.

6. Verfahren nach Anspruch 4 oder 5, wobei die Anzahl der benachbarten Teilnehmer (I, B, D), die die Nachricht erhalten sollen, einen Wert von zwei oder drei aufweist.

7. Verfahren nach einem der vorhergehenden Ansprüche, wobei der Erhalt der Nachricht vom benachbarten Teilnehmer (I, B, D) an den versendenden Teilnehmer (C) bestätigt wird.

8. Verfahren nach Anspruch 7, wobei einem benachbarten Teilnehmer (I, B, D), welcher den Erhalt der Nachricht nicht bestätigt hat, erst wieder die Nachricht übermittelt wird, wenn mindestens ein Übermittlungsversuch der Nachricht an mindestens einen weiteren benachbarten Teilnehmer (I, B, D) nicht oder nur teilweise erfolgreich war.

9. Verfahren nach einem der vorhergehenden Ansprüche, wobei als Basiseinheit (A) entweder eine Brandmeldezentrale, eine Einbruchsmeldezentrale und/oder eine Gasmeldezentrale, oder ein Brandmelder, ein Einbruchsmelder, ein Gasmelder, eine akustische Meldeeinheit, eine optische Meldeeinheit, eine Überwachungskamera und/oder eine opto-akustische Meldeeinheit verwendet wird.

10. Verfahren nach einem der vorhergehenden Ansprüche, wobei als Teilnehmer (B bis T) ein Brandmelder, ein Einbruchsmelder, ein Gasmelder, eine akustische Meldeeinheit, eine optische Meldeeinheit, eine Überwachungskamera und/oder eine opto-akustische Meldeeinheit verwendet wird.

11. Verfahren nach einem der vorhergehenden Ansprüche, wobei die Nachricht eine Alarm-Nachricht, eine Signalisierungsnachricht und/oder eine Nachricht betreffend den Austausch von Nutzdaten darstellt.

12. Verfahren nach einem der vorhergehenden Ansprüche, wobei gemäß einer Regel ein Teilnehmer (J, B, D, T, S, P) niemals eine Nachricht zurück an den Teilnehmer (R, Q, 0, L, K, I, C, E, G) versendet, von dem er die Nachricht erhalten hat.

13. System zur Übertragung einer Nachricht in einem funkbetriebenen Kommunikationsnetz mit einer Basiseinheit (A) und mehreren Teilnehmern (B bis T), wobei die Basiseinheit (B) und die Teilnehmer (B bis T) jeweils einen Sender und einen Empfänger aufweisen und wobei der Empfänger zu zyklischen Einschaltzeitpunkten für jeweils einen bestimmten Empfangszeitraum aktiviert wird,
- mit einem Teilnehmer (C) zum Übermitteln einer vom Teilnehmer (C) an die Basiseinheit (A) zu versendenden Nachricht an mindestens einen benachbarten Teilnehmer (I, B, D) in Abhängigkeit mindestens einer Regel,
- mit dem mindestens einen benachbarten Teilnehmer (I, B, D) zum Übermitteln der Nachricht in Richtung der Basiseinheit (A) gemäß der mindestens einen Regel an mindestens einen seiner benachbarten Teilnehmer (T, B, K, J, D),
- mit dem mindestens einen die Nachricht empfangenden benachbarten Teilnehmer (T, B, K, J, D) zum Übermitteln der Nachricht gemäß der mindestens einen Regel in Richtung der Basiseinheit (A) an mindestens einen seiner benachbarten Teilnehmer (T, B, K, J, D), wobei dieser Vorgang entsprechend wiederholt wird, sodass der jeweilige die Nachricht empfangende Teilnehmer (T, B, K, J, D) gemäß der zumindest einen Regel die Nachricht wiederum an mindestens einen seiner Teilnehmer (T, B, K, J, D) übermittelt, wobei den Teilnehmern (B bis T) in Bezug auf die Basiseinheit (A) unterschiedliche Kommunikationsebenen zugeordnet sind, wobei die mindestens eine Regel die Kommunikationsebene eines Teilnehmers (B bis T) verwendet, und wobei gemäß der Regel vom mindestens einen die Nachricht versendenden Teilnehmer (R, Q, 0, L, K, I, C, E, G) die Nachricht an mindestens zwei Teilnehmer (J, B, D, T, S, P) mit niedrigerer Kommunikationsebene und mit dem jeweils frühest möglichen Einschaltzeitpunkt weitergeleitet wird, und
- mit dem mindestens einen Teilnehmer (B, T, J), der direkt mit der Basiseinheit (A) benachbart ist, zur Übermittlung der Nachricht zumindest an die Basiseinheit (A).

14. System zur Übertragung einer Nachricht in einem funkbetriebenen Kommunikationsnetz nach Anspruch 13, wobei vom mindestens einen die Nachricht versendenden Teilnehmer (R, Q, 0, L, K, I, C, E, G) die Nachricht zuerst an die mindestens zwei Teilnehmer (J, B, D, T, S, P) mit der niedrigeren Kommunikationsebene und dann an mindestens einen Teilnehmer (J, B, D, T, S, P) mit gleich hoher Kommunikationsebene und mit dem jeweils frühest möglichen Einschaltzeitpunkt weitergeleitet wird.

15. System zur Übertragung einer Nachricht in einem funkbetriebenen Kommunikationsnetz nach Anspruch 13, wobei vom mindestens einen die Nachricht versendenden Teilnehmer (R, Q, O, L, K, I, C, E, G) die Nachricht zuerst an zwei Teilnehmer (J, B, D, T, S, P) mit der niedrigeren Kommunikationsebene und dann an mindestens einen Teilnehmer (J, B, D, T, S, P) mit gleich hoher Kommunikationsebene und mit dem frühest möglichen Einschaltzeitpunkt weitergeleitet wird, wenn einer der zwei Teilnehmer (J, B, D, T, S, P) mit der niedrigeren Kommunikationsebene den Erhalt der Nachricht nicht bestätigt hat.

## Claims

1. Method for transferring a message in a radio-operated communication network with a base unit (A) and a plurality of nodes (B to T), wherein the base unit (A) and the nodes (B to T) each have a transmitter and a receiver and wherein the receiver is activated at cyclical switch-on times for a particular receiving time period in each case,
- wherein a message to be sent by a node (C) to the base unit (A) is transmitted by the node (C) to at least one adjacent node (D, B, I) as a function of at least one rule,
- wherein the message is transmitted by the at least one adjacent node (D, B, I) according to the at least one rule, in the direction of the base unit (A), to at least one of its adjacent nodes (T, B, K, J, D),
- wherein this procedure is repeated accordingly, so that the respective node (T, B, K, J, D) receiving the message in turn transmits the message to at least one of its nodes (T, B, K, J, D) according to the at least one rule, wherein the message is transmitted, at least to the base unit (A), by the at least one node (B, T, J) which is directly adjacent to the base unit (A),
- wherein the nodes (B to T) are assigned different communication levels in relation to the base unit (A), wherein the at least one rule uses the communication level of a node (B to T), and
- wherein, according to the rule, the message is forwarded by the at least one node (R, Q, O, L, K, I, C, E, G) sending the message to at least two nodes (J, B, D, T, S, P) with a lower communication level and at the earliest possible switch-on time in each case.

2. Method according to claim 1, wherein the message is first forwarded by the at least one node (R, Q, O, L, K, I, C, E, G) sending the message to the at least two nodes (J, B, D, T, S, P) with the lower communication level and then to at least one node (J, B, D, T, S, P) with an equally high communication level and at the earliest possible switch-on time in each case.

3. Method according to claim 1, wherein the message is first forwarded by the at least one node (R, Q, O, L, K, I, C, E, G) sending the message to two nodes (J, B, D, T, S, P) with the lower communication level and then to at least one node (J, B, D, T, S, P) with an equally high communication level and at the earliest possible switch-on time in each case, if one of the two nodes (J, B, D, T, S, P) with the lower communication level has not confirmed the receipt of the message.

4. Method according to claim 1, 2 or 3, wherein at least one rule indicates the number of adjacent nodes (I, B, D) to which the message is to be transmitted.

5. Method according to claim 4, wherein the number of adjacent nodes (I, B, D), which are to receive the message, is stipulated by a parameter stored at the node (C).

6. Method according to claim 4 or 5, wherein the number of adjacent nodes (I, B, D), which are to receive the message, has a value of two or three.

7. Method according to one of the preceding claims, wherein receiving the message from the adjacent node (I, B, D) is confirmed to the sending node (C).

8. Method according to claim 7, wherein the message is only transmitted once more to an adjacent node (I, B, D), which has not confirmed the receipt of the message, if at least one transmission attempt of the message to at least one further adjacent node (I, B, D) was not or was only partially successful.

9. Method according to one of the preceding claims, wherein either a fire alarm control centre, an intruder alarm control centre and/or a gas alarm control centre, or a fire alarm, an intruder alarm, a gas alarm, an acoustic alarm unit, an optical alarm unit, a monitoring camera and/or an opto-acoustic alarm unit is used as base unit (A).

10. Method according to one of the preceding claims, wherein a fire alarm, an intruder alarm, a gas alarm, an acoustic alarm unit, an optical alarm unit, a monitoring camera and/or an opto-acoustic alarm unit is used as nodes (B to T).

11. Method according to one of the preceding claims, wherein the message represents an alarm message, a signalling message and/or a message relating to the exchange of payload data.

12. Method according to one of the preceding claims, wherein according to one rule, a node (J, B, D, T, S, P) never sends a message back to the node (R, Q, O, L, K, I, C, E, G) from which it has received the message.

13. System for transferring a message in a radio-operated communication network with a base unit (A) and a plurality of nodes (B to T), wherein the base unit (B) and the nodes (B to T) each have a transmitter and a receiver and wherein the receiver is activated at cyclical switch-on times for a particular receiving time period in each case,
- with a node (C) for transmitting a message to be sent by the node (C) to the base unit (A) to at least one adjacent node (I, B, D) as a function of at least one rule,
- with the at least one adjacent node (I, B, D) for transmitting the message, according to the at least one rule, in the direction of the base unit (A) to at least one of its adjacent nodes (T, B, K, J, D),
- with the at least one adjacent node (T, B, K, J, D) receiving the message for transmitting the message in the direction of the base unit (A) to at least one of its adjacent nodes (T, B, K, J, D) according to the at least one rule, wherein this procedure is repeated accordingly, so that the respective node (T, B, K, J, D) receiving the message in turn transmits the message to at least one of its nodes (T, B, K, J, D), wherein the nodes (B to T) are assigned different communication levels in relation to the base unit (A), wherein the at least one rule uses the communication level of a node (B to T), and wherein, according to the rule, the message is forwarded by the at least one node (R, Q, O, L, K, I, C, E, G) sending the message to at least two nodes (J, B, D, T, S, P) with a lower communication level and at the earliest possible switch-on time in each case, and
- with the at least one node (B, T, J), which is directly adjacent to the base unit (A), for transmitting the message at least to the base unit (A).

14. System for transferring a message in a radio-operated communication network according to claim 13, wherein the message is first forwarded by the at least one node (R, Q, O, L, K, I, C, E, G) sending the message to the at least two nodes (J, B, D, T, S, P) with the lower communication level and then to at least one node (J, B, D, T, S, P) with an equally high communication level and at the earliest possible switch-on time in each case.

15. System for transferring a message in a radio-operated communication network according to claim 13, wherein the message is first forwarded by the at least one node (R, Q, O, L, K, I, C, E, G) sending the message to two nodes (J, B, D, T, S, P) with the lower communication level and then to at least one node (J, B, D, T, S, P) with an equally high communication level and at the earliest possible switch-on time in each case, if one of the two nodes (J, B, D, T, S, P) with the lower communication level has not confirmed the receipt of the message.

## Revendications

1. Procédé de transmission d'un message dans un réseau de radiocommunication comportant une unité de base (A) et plusieurs usagers (B à T), l'unité de base (A) et les usagers (B à T) comportant respectivement un émetteur et un récepteur et le récepteur étant activé à des instants de mise en marche cycliques pour respectivement une période de réception déterminée,
- un message à envoyer d'un usager (C) à l'unité de base (A) étant transmis de l'usager (C) à au moins un usager voisin (D, B, I) en fonction d'au moins une règle,
- le message étant transmis, selon l'au moins une règle, de l'au moins un usager voisin (D, B, I), en direction de l'unité de base (A), à au moins l'un de ses usagers voisins (T, B, K, J, D),
- cette opération étant ainsi répétée de sorte que l'usager respectif (T, B, K, J, D) recevant le message transmet à son tour le message, selon l'au moins une règle, à au moins l'un de ses usagers (T, B, K, J, D), le message étant transmis de l'au moins un usager (B, T, J) directement voisin de l'unité de base (A) au moins à l'unité de base (A),
- les usagers (B à T) étant, par rapport à l'unité de base (A), associés à différents niveaux de communication, l'au moins une règle utilisant le niveau de communication d'un usager (B à T) et
- le message étant retransmis, selon la règle, de l'au moins un usager (R, Q, O, L, K, I, C, E, G) émettant le message à au moins deux usagers (J, B, D, T, S, P) avec un niveau de communication inférieur et à l'instant de mise en marche respectivement le plus précoce possible.

2. Procédé selon la revendication 1, le message étant retransmis de l'au moins un usager (R, Q, O, L, K, I, C, E, G) émettant le message, tout d'abord aux au moins deux usagers (J, B, D, T, S, P) avec le niveau de communication inférieur, puis à au moins un usager (J, B, D, T, S, P) avec un même niveau de communication et à l'instant de mise en marche respectivement le plus précoce possible.

3. Procédé selon la revendication 1, le message étant retransmis de l'au moins un usager (R, Q, O, L, K, I, C, E, G) émettant le message, tout d'abord à deux usagers (J, B, D, T, S, P) avec le niveau de communication inférieur, puis à au moins un usager (J, B, D, T, S, P) avec un même niveau de communication et à l'instant de mise en marche respectivement le plus précoce possible si l'un des deux usagers (J, B, D, T, S, P) avec le niveau de communication inférieur n'a pas confirmé la réception du message.

4. Procédé selon la revendication 1, 2 ou 3, au moins une règle indiquant le nombre d'usagers voisins (I, B, D) auxquels le message doit être transmis.

5. Procédé selon la revendication 4, le nombre d'usagers voisins (I, B, D) qui doivent recevoir le message étant fixé par un paramètre sauvegardé chez l'usager (C).

6. Procédé selon la revendication 4 ou 5, le nombre d'usagers voisins (I, B, D) qui doivent recevoir le message présentant une valeur de deux ou trois.

7. Procédé selon l'une des revendications précédentes, la réception du message par l'usager voisin (I, B, D) étant confirmée à l'usager émetteur (C).

8. Procédé selon la revendication 7, le message n'étant de nouveau transmis à un usager voisin (I, B, D) qui n'a pas confirmé la réception du message que si au moins une tentative de transmission du message à au moins un autre usager voisin (I, B, D) n'a pas ou n'a que partiellement réussi.

9. Procédé selon l'une des revendications précédentes, une centrale de détection d'incendie, une centrale de détection d'effraction et/ou une centrale de détection de gaz ou un détecteur d'incendie, un détecteur d'effraction, un détecteur de gaz, une unité de détection acoustique, une unité de détection optique, une caméra de surveillance et/ou une unité de détection opto-acoustique étant utilisés en tant qu'unité de base (A).

10. Procédé selon l'une des revendications précédentes, un détecteur d'incendie, un détecteur d'effraction, un détecteur de gaz, une unité de détection acoustique, une unité de détection optique, une caméra de surveillance et/ou une unité de détection opto-acoustique étant utilisés en tant qu'usagers (B à T).

11. Procédé selon l'une des revendications précédentes, le message étant un message d'alarme, un message de signalisation et/ou un message relatif à l'échange de données utile.

12. Procédé selon l'une des revendications précédentes, un usager (J, B, D, T, S, P), conformément à une règle, ne retournant jamais un message à l'usager (R, Q, O, L, K, I, C, E, G) dont il a reçu le message.

13. Système de transmission d'un message dans un réseau de radiocommunication comportant une unité de base (A) et plusieurs usagers (B à T), l'unité de base (B) et les usagers (B à T) comportant respectivement un émetteur et un récepteur et le récepteur étant activé à des instants de mise en marche cycliques pour respectivement une période de réception déterminée,
- comportant un usager (C) pour la transmission d'un message à envoyer de l'usager (C) à l'unité de base (A) à au moins un usager voisin (I, B, D) en fonction d'au moins une règle,
- comportant l'au moins un usager voisin (I, B, D) pour la transmission du message en direction de l'unité de base (A) selon l'au moins une règle à au moins l'un de ses usagers voisins (T, B, K, J, D),
- comportant l'au moins un usager voisin (T, B, K, J, D) recevant le message, pour la transmission du message selon l'au moins une règle en direction de l'unité de base (A) à au moins l'un de ses usagers voisins (T, B, K, J, D), cette opération étant ainsi répétée de sorte que l'usager respectif (T, B, K, J, D) recevant le message transmet à son tour le message, selon l'au moins une règle, à au moins l'un de ses usagers (T, B, K, J, D), différents niveaux de communication étant associés aux usagers (B à T) par rapport à l'unité de base (A), l'au moins une règle utilisant le niveau de communication d'un usager (B à T) et
- le message étant retransmis, selon la règle, de l'au moins un usager (R, Q, O, L, K, I, C, E, G) émettant le message à au moins deux usagers (J, B, D, T, S, P) avec un niveau de communication inférieur et à l'instant de mise en marche respectivement le plus précoce possible et
- comportant l'au moins un usager (B, T, J) qui est directement voisin de l'unité de base (A) pour la transmission du message au moins à l'unité de base (A).

14. Système de transmission d'un message dans un réseau de radiocommunication selon la revendication 13, le message étant tout d'abord retransmis de l'au moins un usager (R, Q, O, L, K, I, C, E, G) émettant le message aux au moins deux usagers (J, B, D, T, S, P) avec le niveau de communication inférieur, puis à au moins un usager (J, B, D, T, S, P) avec le même niveau de communication et à l'instant de mise en marche respectivement le plus précoce possible.

15. Système de transmission d'un message dans un réseau de radiocommunication selon la revendication 13, le message étant tout d'abord retransmis de l'au moins un usager (R, Q, O, L, K, I, C, E, G) émettant le message à deux usagers (J, B, D, T, S, P) avec le niveau de communication inférieur, puis à au moins un usager (J, B, D, T, S, P) avec le même niveau de communication et à l'instant de mise en marche le plus précoce possible si l'un des deux usagers (J, B, D, T, S, P) avec le niveau de communication inférieur n'a pas confirmé la réception du message.
